Europäisches Patentamt

European Patent Office

Office européen des brevets

(11) Publication number: **0 411 561 A1**

# EUROPEAN PATENT APPLICATION

(21) Application number: **90114667.0**

(22) Date of filing: **31.07.90**

(51) Int. Cl.⁵: **F01N 3/28**

(30) Priority: **02.08.89 IT 4167689**

(43) Date of publication of application:
**06.02.91 Bulletin 91/06**

(84) Designated Contracting States:
**AT CH DE FR LI**

(71) Applicant: **APRILIA S.P.A.**
**Via Galileo Galilei 1**
**I-30033 Noale (Venezia)(IT)**

(72) Inventor: **Beggio, Ivano**
**Via Galileo Galieli 3**
**I-30033 Noale (Venezia)(IT)**

(74) Representative: **Modiano, Guido et al**
**MODIANO, JOSIF, PISANTY & STAUB**
**Modiano & Associati Via Meravigli, 16 16 16**
**I-20123 Milano(IT)**

(54) **Catalytic muffler structure for engines.**

(57) The muffler structure is of the type which comprises a shaped tubular body (1), an end whereof is fixed to the exhaust coupling of the engine whereas a silencer (7) with a catalyst (8) which extends inside the body (1) is associated with the other end. The structure is characterized in that it comprises in the body (1), which is externally insulated, a pre-catalyst (9) located proximate to the engine's exhaust port. The pre-catalyst (9) is suitable for raising the temperature of the exhaust gases to values sufficient to activate the catalyst.

Fig. 1

## CATALYTIC MUFFLER STRUCTURE FOR ENGINES

The present invention relates to a catalytic muffler structure for engines.

It is known that catalysts used in mufflers need to reach activation temperatures in the range of 300° C.

In motorcycling applications, the catalysts are located in the rear parts of the mufflers, ahead of the silencers, so that in particular in high-power motorcycles, when the engine is at a low rpm rate the exhaust gases reach said catalysts when they are too cold for activation.

This causes homologation problems as well as actual operating problems.

The cycles and tests to which the mufflers are subjected in fact entail operation with the engine subjected to typical city-center rpm rates, i.e. with frequent stops and operation at low rpm.

Moving the catalyst to the front part of the muffler, proximate to the exhaust port, so as to place it in contact with still-hot gases, causes more severe problems, in particular in the case of two-stroke motorcycles, since it is indeed the muffler which determines the efficiency of the engine and the power it develops.

An effective catalyst proximate to the exhaust port would choke the muffler to such an extent as to cause a drop in the engine's performance.

The aim of the present invention is to provide a catalytic muffler structure for engines, in particular two-stroke engines, which allows the operation of the catalyst even at low rpm rates of the engine.

A consequent primary object is to provide a catalytic muffler structure having an installation which on two-stroke engines does not penalize their performance.

Another important object is to provide a catalytic muffler structure which can also be used for four-stroke engines.

Still another object is to provide a catalytic muffler structure which can be installed both on newly manufactured motorcycles and on used motorcycles.

This aim, these objects and others which will become apparent hereinafter are achieved by a muffler structure for engines, of the type which comprises a shaped tubular body which is fixed with one end to the exhaust coupling of the engine and is associated, at its other end, with a silencer fitted with a catalyst which extends inside it, characterized in that it comprises, in said body, which is externally insulated, a pre-catalyst which is arranged proximate to the exhaust port of the engine and is suitable for raising the temperature of the exhaust gases to values sufficient to activate said catalyst.

Further characteristics and advantages will become apparent from the detailed description of an embodiment of the invention, illustrated only by way of non-limitative example in the accompanying drawings, wherein:

figure 1 is a sectional side view, taken along a longitudinal plane, of a muffler structure according to the invention;

figure 2 is an enlarged-scale detail view of the region of the muffler of figure 1, comprising a pre-catalyst;

figure 3 is a longitudinal sectional view of the pre-catalyst fitted in the muffler according to the invention;

figure 4 is an enlarged-scale front view of the pre-catalyst of figure 3.

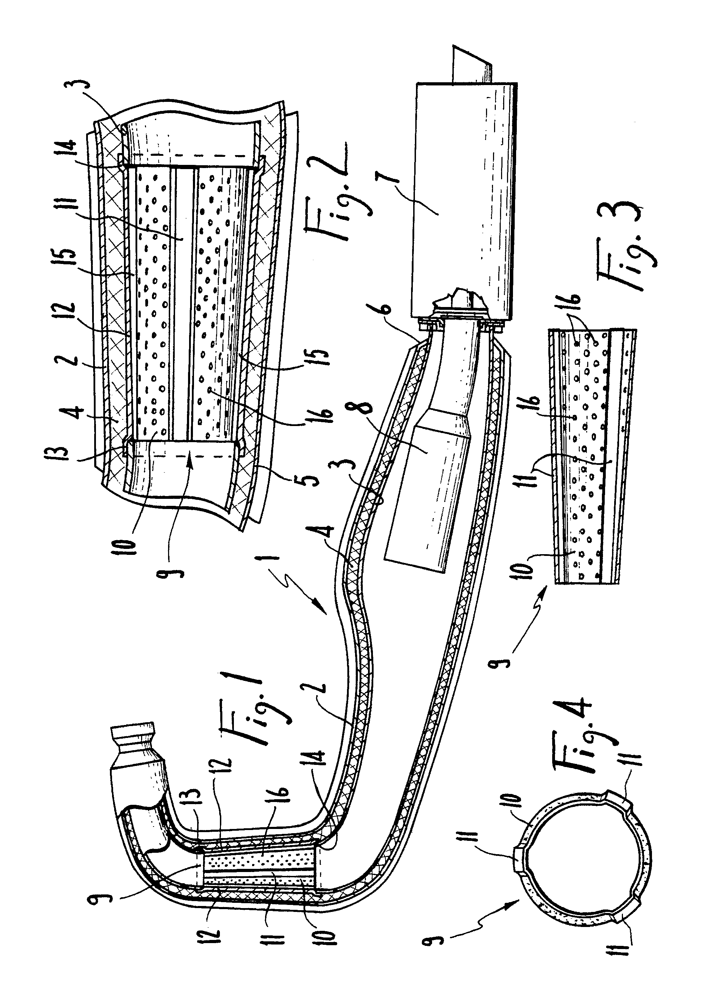

With reference to the above figures, a muffler structure for engines comprises a shaped tubular body 1 which is substantially composed of two substantially concentric metallic elements, respectively indicated by 2 and 3, which are mutually welded only at their end regions.

A layer of thermally insulating material 4 is interposed between the two metallic elements 2 and 3 and is suitable for insulating the outer element from the inner one, which is subjected to high temperatures.

A narrower end 5 of the muffler structure is fixable to the exhaust coupling of an engine, whereas a silencer 7 is bolted to the opposite end 6; a catalyst 8 extends internally into the larger end portion of the structure from said silencer.

According to the invention, a pre-catalyst 9 is located in a region proximate to the exhaust port of said engine and is substantially constituted by a substantially conical tubular metallic element 10 which has three longitudinal raised and shaped portions 11 which rest on the inner wall of another substantially conical tubular metallic element 12 which replaces a section of said element 3 and has flared ends 13 and 14 suitable for allowing a good insertion coupling.

A sort of longitudinal interspace 15, open at its ends and connected to the inside by means of a plurality of holes 16 arranged on the entire surface of the element 10, is thus formed for the metallic element 10 of the pre-catalyst 9 and the other metallic element 12.

The pre-catalyst 9 is conveniently made of a high-alloy steel, the composition whereof comprises approximately 20% chromium and approximately 5% aluminum.

The exhaust gases expelled by the engine, by passing through the region of the pre-catalyst 9, are induced to pass from the interspace to the inside and vice versa through the holes 16.

It has been observed that at the exit from the pre-catalyst 9 the temperature of the exhaust gases undergoes a considerable increase, which raises said gases from approximately 300°, which is their temperature immediately after entering the muffler, to approximately 800°, cooling along the muffler until they reach temperatures which are never lower than 280°-300°.

This ensures the activation of the catalyst in any operating condition.

The particular shape of the pre-catalyst 9 ensures that it does not constitute a choke for the exhaust gases and that it consequently does not penalize the performance of the engine which, in particular if it is of the two-stroke type, is particularly delicate and is decisively influenced by the muffler.

It has thus been observed in practice that the invention has achieved the intended aim and objects.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Muffler structure for engines, of the type which comprises a shaped tubular body which is fixed with one end to the exhaust coupling of the engine and is associated, at its other end, with a silencer fitted with a catalyst which extends inside it, characterized in that it comprises in said body, which is externally insulated, a pre-catalyst which is located proximate to the exhaust port of the engine and is suitable for raising the temperature of the exhaust gases to values sufficient for activating said catalyst.

2. Muffler structure according to claim 1, characterized in that said body comprises two substantially concentric metallic elements which are mutually welded at their ends, a layer of insulating material being interposed between said metallic elements.

3. Muffler structure according to claims 1 and 2, characterized in that said pre-catalyst comprises a substantially conical tubular metallic element having longitudinal raised and shaped portions for resting on the inside of said body, said tubular metallic element having a plurality of holes arranged on its entire surface.

4. Muffler structure according to one or more of the preceding claims, characterized in that said pre-catalyst is made of high-alloy steel which has, among its components, approximately 20% chromium and approximately 5% aluminum.

5. Muffler structure according to one or more of the preceding claims, characterized in that said pre-catalyst rests on an inner surface of a substantially conical tubular metallic element which is concentric thereto and which replaces a portion of the element of the body and which has flared ends for a perfect insertion coupling.

6. Muffler structure according to one or more of the preceding claims, characterized in that a sort of interspace is formed between said pre-catalyst and the surface on which it rests which is open at its ends and is connected to the inside by means of said holes provided on the surface of said pre-catalyst.

Fig. 1

Fig. 2

Fig. 3

Fig. 4

European
Patent Office

EUROPEAN SEARCH
REPORT

Application Number

EP 90 11 4667

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | FR-A-2 179 689  (QUESTOR CORPORATION) <br> * page 15, line 20 - page 16, line 9 * * page 20, line 26 - page 24, line 29; figures 9, 10, 16, 17 * | 1,2 | F 01 N 3/28 |
| Y | DE-A-2 453 280  (VOLKSWAGENWERK) <br> * page 3, paragraph 2 - page 5, paragraph 1; figure 1 * | 1 | |
| A | US-A-4 188 783  (SAYO) <br> * column 1, line 66 - column 2, line 55; figures 1, 2 * | 1,2 | |
| A | DE-A-2 436 559  (ROBERT BOSCH G.M.B.H.) <br> * page 4, last paragraph - page 6, paragraph 1; figures 1, 2 * | 1,2 | |
| A | PATENT ABSTRACTS OF JAPAN vol. 2, no. 48 (C-10)() 31 March 1978, <br> & JP-A-53 3962 (MATSUSHITA) 14 January 1978, <br> * the whole document * | 1 | |
| A | US-A-4 195 063  (IWAOKA) <br> * the whole document * | 1 | |
| A | DE-A-2 942 728  (BREMSHEY AG) | | TECHNICAL FIELDS SEARCHED (Int. Cl.5) |
| A | US-A-3 927 525  (JACOBS) | | F 01 N |

The present search report has been drawn up for all claims

| Place of search | Date of completion of search | Examiner |
|---|---|---|
| The Hague | 31 October 90 | FRIDEN C.M. |